# EUROPEAN PATENT APPLICATION

(11) **EP 2 187 299 A2**
(43) Date of publication of application: **19.05.2010**
(21) Application number: 09175972.0
(22) Date of filing: 13.11.2009
(51) Int. Cl.: G06F 3/048, G05B 19/00, H04N 5/00

(54) **Graphical user interface control system**

(30) Priority: 17.11.2008 GB 0820968
(71) Applicant: Hi Tech System Limited, Oakley Basingstoke Hampshire RG23 7JY (GB)
(72) Inventor: Favell, Thomas, Oakley, Basingstoke, Hampshire RG23 7JY (GB)
(74) Representative: Treleven, Colin

(57) **Abstract**

The invention provides a configurable control system (300) and method of controlling a graphical user interface (310, 350). The graphical user interface comprises a graphical user interface application (350) installed on a computer (320), and an associated graphical user interface display (310).

A configurable hardware panel (380) is connectable to the computer (320). A local application (370) for installation on the computer (320) is adapted to:
(i) learn the function of a particular control of the graphical user interface;
(ii) configure the configurable hardware panel (380); and
(iii) provide communication between the configurable hardware panel (380) and the graphical user interface (310, 350).

The invention allows a user to configure a hardware panel, without requiring programming skills. One configurable hardware panel (380) may provide simultaneous control of multiple graphical user interfaces, running on one or more computers.

## Description

### Field of the Invention

The invention concerns a configurable control system for one or more graphical user interfaces.

### Background of the Invention

A graphical user interface, henceforth a GUI, is a system for providing control or functional inputs to a computer program, or an application shown on a computer screen.

The GUI comprises a GUI display, with one or more icons on the computer screen. The setting of each icon can be altered. An alteration of the setting of each icon may be achieved, for example, using a mouse.

The GUI also comprises a GUI application, which is a piece of software running on a computer. The GUI display works together with the GUI application. The GUI application receives the settings of the icons, and acts in response to the settings.

In the remainder of this document, the GUI will be considered to comprise a GUI display and a GUI application.

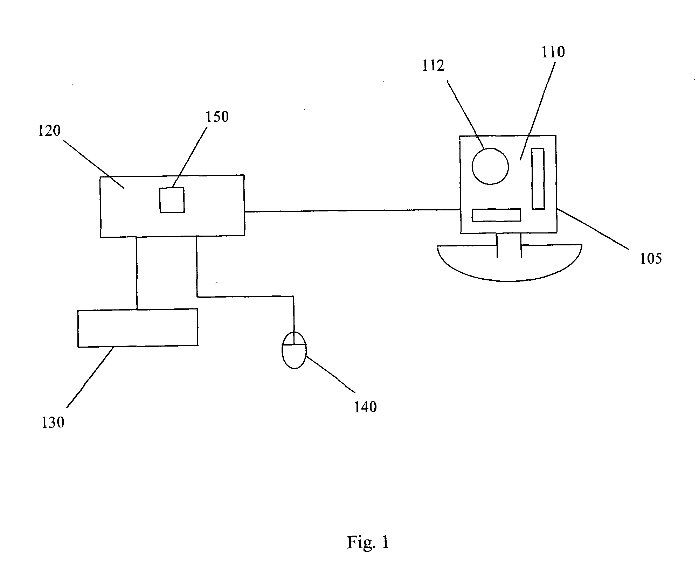

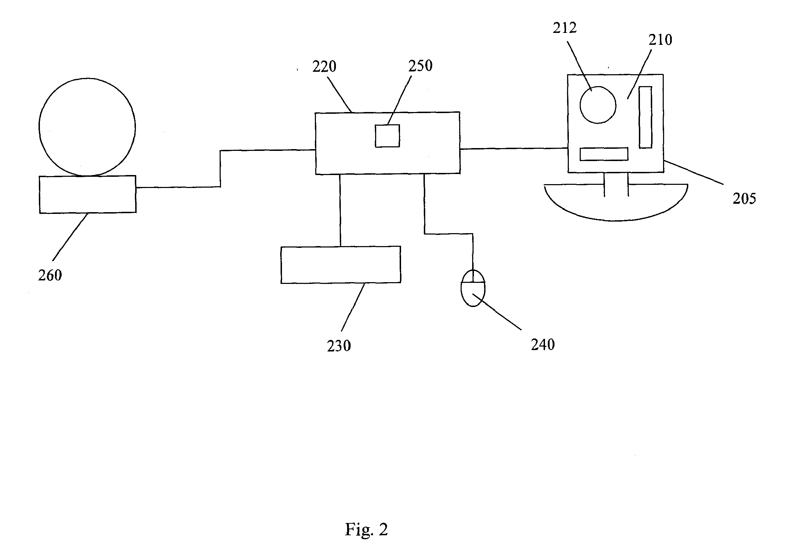

A GUI application may act in response to the settings of the icons in one of two ways. Figure 1 illustrates the first of these ways, and figure 2 illustrates the second.

Figure 1 shows an arrangement by which the settings of the icons of the GUI may change a function within the GUI application itself.

In figure 1, computer screen 105 displays icons of a GUI display 110, such as icon 112. A GUI application 150 runs on computer 120. Keyboard 130 and mouse 140 allow a user to change the settings of icons on screen 110.

When a user changes the setting of an icon 112 on screen 105, this alters the setting of a function in GUI application 150 running on computer 120.

As an example of the arrangement shown in figure 1, GUI application 150 might be the Windows Media Player^{™} software. The icons 112 of GUI display 110 take the form of buttons and sliders, which represent functions within the media player itself. If a user moves the slider that represents the volume of the player, then that action leads to an increase in the volume level of the sound from the media player.

Figure 2 shows an arrangement by which the GUI icons represent functions in an electrical or electronic system that is itself not part of the GUI application. The GUI application passes on the values of the settings from the icons to the electrical or electronic system, thereby achieving control of that system.

In figure 2, computer screen 205 displays icons of a GUI display 210, such as icon 212. The GUI application 250 runs on computer 220. Icon 212 on computer screen 205 represents a function in an electronic device 260.

Electronic device 260 is separate from computer 220, but is linked to computer 220.

Keyboard 230 and mouse 240 allow a user to change the settings of icons on computer screen 205. Each such change leads to a change in the settings of electronic device 260.

An example of a GUI icon 212 would be a pictorial representation of a temperature control. The pictorial representation might comprise a scale of temperatures, e.g. 0-100 degrees C, and a slide control appearing next to or over the scale of temperatures. A user of the GUI can move a pointer on screen 205, for example under the control of mouse 240, thereby moving the slide control along the scale portion of the icon 212. This action changes the temperature setting of the electronic device 260. At the same time as moving the pointer on the screen, the user is able to watch how far along the scale he has moved the slide control.

Although the system of figure 2 has been described as controlling an electronic device 260, the term 'electronic device' should be interpreted broadly. This device might be a discrete object, such as a camera or a video system. It might however be an entire system in its own right, such as a power station.

There are occasions where it is desirable to control a GUI from another device, which will be termed here an 'alternative' device. The alternative device may be located remotely, i.e. it may be far from computer 220 and/or computer screen 205. However, the alternative device may instead be located together with computer 220 and/or computer screen, and simply replace keyboard 230 and mouse 240.

Examples of when it is desirable to use an alternative device to control a GUI:
(i) If there is a desire to provide a more reliable and dedicated button, or buttons, to control a particular function on the GUI. This might occur in an environment where it is critical that the correct button be pressed on the GUI.
(ii) When there is a need to provide control to people with visual and mobility problems. For these users, the alternative device offers a different form of interface. If such users cannot see icons on a screen, then a configurable control system can be set up using, for example, only controls that need to be felt with hands. Braille writing might be added around the controls of the configurable control system.

The GUIs may be located on computer systems that utilise a variety of operating systems, such as Windows ®, Linux, Mac (OSX) ®. The GUIs themselves may have a wide range of control inputs, such as buttons, wheels and slider controls that the user is required to operate to effect an operation.

Several arrangements of alternative devices are known in the prior art for controlling a GUI.

In a first known arrangement, the alternative device comprises a hardware control panel, which can connect to a computer such as computer 220. The alternative device is arranged to send keyboard 'shortcuts' directly to a GUI application on computer 220. Examples of keyboard shortcuts include 'Ctrl + C' in Word to copy text, or a facility in some Media Players whereby the left and right arrow keys will move the video forward and back. The connection between the alternative device and computer 220 may either be achieved wirelessly, or via a wired connection. The alternative device therefore enables a degree of configurable control over the GUI on computer 220. The alternative device may be located together with computer 220, or located remotely. This known arrangement has the disadvantage that it requires keyboard shortcuts to be designed into the GUI application that is to be controlled. It can therefore only work for a GUI application that has been specifically designed for control using this hardware control panel.

A further disadvantage of this first known arrangement occurs when more than one application or window is open at the same time on computer 220 and computer screen 205. As a result, extra action is required for computer 220 to know which GUI application is the one to be controlled. In this case, the GUI application to be controlled must first have 'focus'. Here 'focus' means that, when there are several applications running on the computer at the same time, the user must actively select the application to be controlled. This selection might occur by clicking the mouse. In Windows®, the selected application will usually have the blue bar at the top, and other 'non-selected' applications will have a grey bar. After making this selection, the commands from the hardware control panel can be sent to the correct application.

In a second known arrangement, a GUI application has a built-in configurable control protocol. This enables an alternative device to take direct control of the GUI application. A disadvantage of this arrangement is that it requires the alternative device to be a dedicated control panel, which is designed specifically to control a particular, dedicated GUI application.

In a third known arrangement, software "tools" are available to create a bespoke application. The bespoke application will be located on computer 220, i.e. on the computer where the GUI application is located. The bespoke application is created by "learning" how the GUI works. Once this learning process is complete, the bespoke application could then be controlled by an alternative device. A very major disadvantage of this arrangement is that it requires the user to have programming knowledge. It is also time-consuming. A further disadvantage is that it is difficult to test the programming of the bespoke application, so it is difficult to know that the programming has been carried out correctly.

A fourth known arrangement involves the use of Microsoft Windows ® 'Intellitype' ® messaging commands. However, this arrangement requires that the GUI application to be controlled understands Intellitype messaging commands.

A fifth known method of control is built into some operating systems, such as Windows and the Mac operating system. The method of control is called the 'Human Interface Device' (HID). This approach again requires the application to be specially written with HID in mind. However, it does not require an additional piece of software running on the computer where the GUI application is running.

### Statement of Invention

The invention comprises a configurable control system for a graphical user interface as claimed in appended claim 1.

The invention also comprises a configurable control system for multiple graphical user interfaces as claimed in appended claim 7.

The invention also comprises a method of controlling a graphical user interface in accordance with appended claim 12.

The invention also comprises a computer program or a computer program product in accordance with appended claim 15.

The dependent claims provide details of further preferred embodiments of the invention.

The configurable control system of the invention comprises a configurable hardware control panel. Various embodiments of the invention show some or all of the following advantages:
1. The user is not required to have programming skills or the ability to write computer script.
2. There is no need for special coding to learn about the control of a GUI.
3. One configurable hardware control panel may control more than one GUI on a computer, at any one time.
4. One configurable hardware control panel may control more than one GUI, running on more than one computer, at any one time.
5. A controlled GUI can be moved on the screen after programming.
6. The controlled GUI does not need to have "focus" to be controlled.

The invention may allow control of any GUI with buttons and sliders that the GUI operating system:
(i) allows detection of; and
(ii) has been programmed in accordance with.

### Brief Description of the Drawings

Figure 1 is a schematic diagram of a prior art GUI.
Figure 2 is a schematic diagram of a prior art GUI controlling a separate electronic device.
Figure 3 shows a configurable control system in accordance with the present invention.
Figure 4 shows detail of the interaction between the elements in the computer.
Figure 5 shows a graphical representation of the configurable hardware panel on the screen.
Figure 6 shows input actuators on the configurable hardware panel.
Figure 7 shows a further embodiment, with a configurable hardware panel controlling multiple graphical user interfaces running on one computer.
Figure 8 shows a further embodiment, with a configurable hardware panel controlling multiple graphical user interfaces running on more than one computer.
Figure 9 shows which input actuators of the configurable hardware panel control various functions of multiple graphical user interfaces.
Figure 10 shows a schematic view of a computer screen, computer and configurable hardware control panel of the invention, generally corresponding to the arrangement of figure 3.
Figure 11 shows a view of a computer screen, showing the step of associating icons of the graphical representation of the configurable hardware panel with icons from two GUI displays.
Figure 12 shows a configurable hardware panel controlling four GUIs on three separate computer screens.

### Description of Preferred Embodiments

The configurable control system of the invention comprises a configurable hardware panel that can be configured for different applications and tasks. The configurable hardware panel may replace the keyboard and mouse used to operate one or more graphical user interfaces (GUIs), or it may work alongside them. The configurable control system of the invention also comprises a local application, which runs on the same computer as a graphical user interface that is to be controlled.

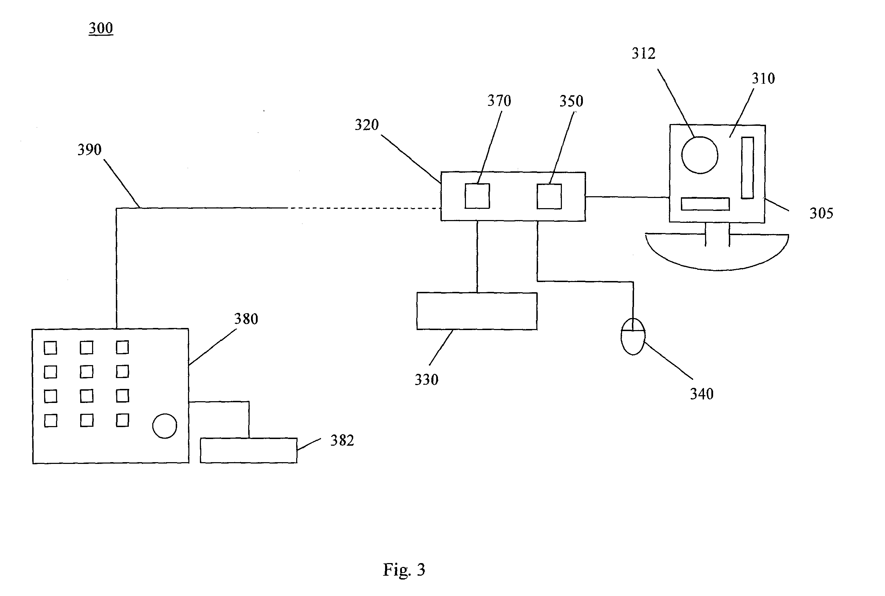

Figure 3 shows a configurable control system 300 for a graphical user interface. The graphical user interface comprises the GUI display 310, together with GUI application 350 that supports it. GUI display 310 is visible on computer screen 305, and GUI application 350 runs on computer 320.

Configurable control system 300 comprises a configurable hardware panel 380. Configurable hardware panel 380 can be connected to computer 320.

Configurable control system 300 also comprises a local application 370 for installation on computer 320. Local application 370 runs as a service on computer 320, and is adapted to:
(i) configure the configurable hardware panel 380; and
(ii) provide communication between configurable hardware panel 380 and GUI application 350.

Keyboard 330 and mouse 340 are connected to computer 320.

Connection 390 provides communication between configurable hardware panel 380 and computer 320. Connection 390 is shown partly as a broken line, in order to indicate that connection 390 may be a wireless or internet connection. Connection 390 may be a serial connection, a USB connection or a network connection.

Local application 370 is adapted to:
(i) access one or more controls of the GUI 310, 350; and
(ii) configure the configurable hardware panel 380 by passing information about the one or more controls of the GUI 310, 350 to the configurable hardware panel 380.

Here the 'controls' are the sections of GUI application 350 that are responsible for particular icons 312 of GUI display 310, and for controlling the functions that those icons represent.

Local application 370 may be adapted to access and save a configuration of the GUI 310, 350 and to download the configuration to the configurable hardware panel 380. Here a configuration contains information about a particular group of icons 312 and the functions that they control. The configuration then enables various input actuators on configurable hardware panel 380 to take control over the settings of icons 312, and hence of the functions that they control. The input actuators shown as examples on configurable hardware panel 380 comprise buttons and a rotary wheel, and these input actuators are described in greater detail in later figures.

Keyboard 382 is also provided together with configurable hardware panel 380. The keyboard 382 allows characters to be entered remotely into text or list boxes on the GUI display 310, by the user who is operating configurable hardware panel 380.

Although the term 'configurable hardware panel' is used in this application, other configurable hardware arrangements would be suitable. An important issue is that the panel has "proper" hardware buttons. Hence a keypad might surface in some applications, i.e. a panel with only buttons, rather than rotary controls, joysticks etc.

The invention allows control of a GUI in a way not known in the prior art. The invention is particularly advantageous for computer operational areas or desks that have several keyboards. In this situation, vital operations can be replaced with a single configurable hardware panel 380. In addition, critical operational processes that currently rely on a keyboard and mouse can be controlled from a dedicated hardware button or rotary control.

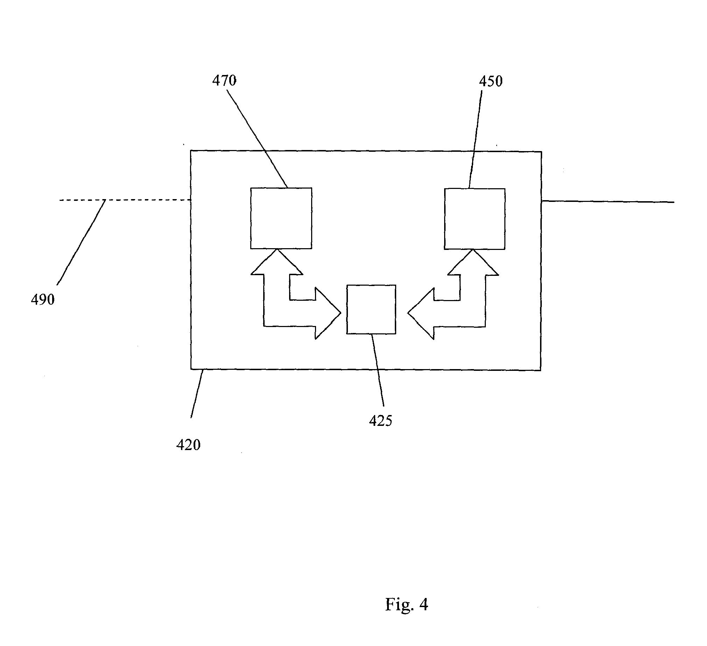

Figure 4 shows greater detail of the interaction between the elements in the computer.

In figure 4, operating system 425 runs on computer 420. Local application 470 and GUI application 450 also run on computer 420. Connection 490 between computer 420 and configurable hardware panel 480 is also shown. Computer 420, local application 470, GUI application 450 and connection 490 correspond to the similarly numbered elements of figure 3.

As indicated on figure 4, local application 470 can access GUI application 450 via operating system 425 of computer 420. In this way, local application 470 can access the controls of GUI 310, 350.

Local application 370, 470 may be adapted to provide a graphical representation of the configurable hardware panel 380. The graphical representation is provided on the computer screen 305.

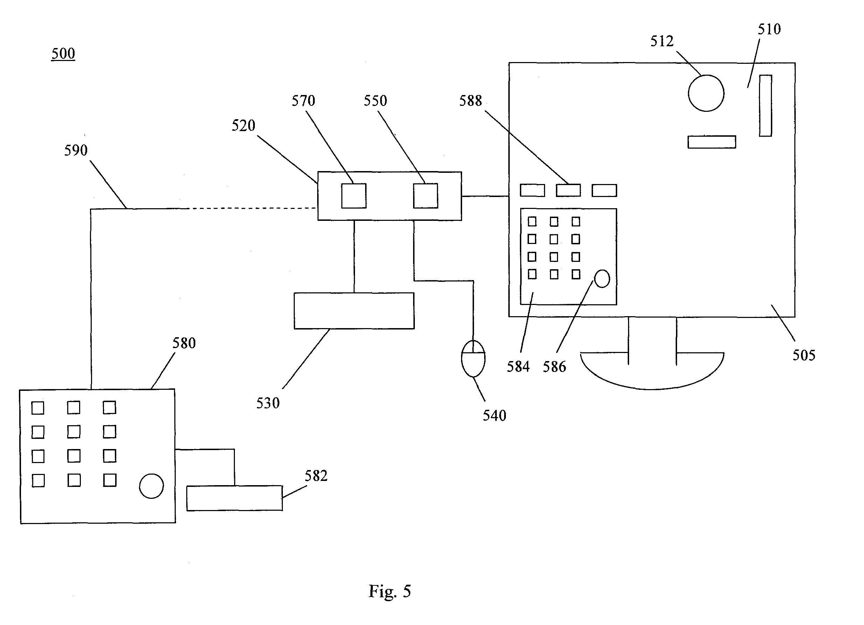

Figure 5 shows more clearly the graphical representation of the configurable hardware panel on the computer screen.

In figure 5, screen 505 displays icons, such as icon 512, of GUI display 510. Screen 505, GUI display 510 and icon 512, which correspond to the similarly numbered elements of figure 3. Computer 520, keyboard 530, mouse 540, GUI application 550, local application 570, configurable hardware panel 580, keyboard 582 and connection 590 also correspond to the similarly number elements on figure 3.

Local application 570 provides a graphical representation 584 of the configurable hardware panel 580. Graphical representation 584 is presented on screen 505, and comprises icons 586, 588.

Icons 586 represent the various controls on configurable hardware panel 580. At least some of icons 586 take the form of buttons, rotary wheels and/or sliders.

Local application 570 is adapted to learn the function of a particular control 512 of the GUI 510, 550 when a user drags and drops one of the icons 586 onto the icon 512 for that control. During this learning period, the GUI 510, 550 is running normally on computer 520. Importantly, the GUI application 550 that is to be controlled does not have to have been written with any special control commands built in.

In the example shown in figure 5, both icon 512 and icon 586 represent rotary control knobs. If the user drags and drops the icon 586 onto icon 512, then local application 570 accesses GUI application 550 to learn the function of the control represented by icon 512. This action creates an association between icons 586 and 512.

As an alternative to dragging and dropping one of the icons 586 of graphical representation 584, the user may create an association between an icon 586 and a particular control of the GUI 510, 550 by other actions. For example, the user might click successively with the mouse on the icon 586 and the particular icon of the GUI display 510.

Graphical representation 584 of configurable hardware panel 580 also comprises program icons 588. Three rectangular icons 588 are shown on figure 5. This group of program icons 588 is provided to enable a user to select between a learning mode, a program mode and a translator mode.

The learning mode, program mode and translator mode function as follows:
(i) When a user selects the learning mode, icons 586 can then be associated with various icons 512 of GUI display 510, and hence the corresponding controls of GUI 510, 550. This can be achieved by the 'drag and drop' action described above.
(ii) In the program mode, the information gained in the learning mode can then be downloaded as a 'configuration' to configurable control panel 580. This instructs each input actuator on configurable control panel 580 about how to carry out the function of one of the icons of GUI display 510.
(iii) When translator mode has been selected, a user can use the input actuators of configurable control panel 580 to control the functions of the icons 512.

In particular, during the learning and program modes, the icons 588 allow a user to:
(i) Program the visual appearance of one or more input actuators on the configurable hardware panel, using a display built into the top of each of the one or more input actuators.
(ii) Program the equivalent of the mechanical features of one or more input actuators e.g., latch, follow and momentary activation.
(iii) Assign actions to one or more input actuators.
(iv) Test the appearance and function of one or more input actuators.
(v) Save and load configurations for configurable hardware panel 580.
(vi) Download configurations to configurable hardware panel 580.

The input actuators of configurable hardware panel 580 may include buttons, rotary wheels, sliders, joysticks and tracker balls. These input actuators adopt the same actions as the controls of the GUI application 550, based on information received from the local application 570 during the program mode.

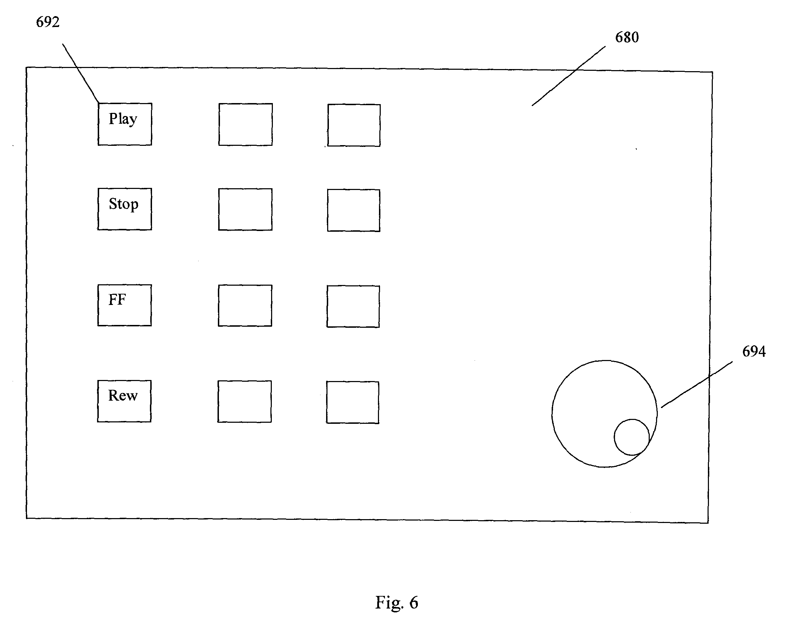

Figure 6 shows the configurable hardware panel in greater detail.

Configurable hardware panel 680 includes input actuators 692, 694.

Input actuator 694 is a rotary control. Input actuator 694 may, for example, be programmed to act as a configurable control for the rotatable wheel icon 512 in figure 5. Icon 586 on graphical representation 584 in figure 5 represents input actuator 694.

One or more of input actuators 692, 694 has a programmable display built into the top of the actuator.

In figure 6, the programmable display on each input actuator 692 is adapted to show text and/or graphics identifying one of the controls of the GUI 510, 550. Text is shown on the input actuators of the first column in figure 6. Various actuators have the words 'Play' and 'Stop', and abbreviations 'FF' (fast forward) and 'Rew' (rewind) currently programmed onto them.

In one detailed arrangement:
(i) Configurable hardware panel 680 comprises buttons and a rotary control wheel;
(ii) Each button 692 is adapted to reproduce the actions of a button on the GUI display 510;
(iii) Each button 692 has a programmable display adapted to show the identity and/or function of the corresponding button on the GUI display 510;
(iv) The rotary control wheel 694 is adapted to reproduce the actions of one or more rotary or slider controls on the GUI.

Rotary control wheel 694 can be adapted to rotate freely. Alternatively, the user may choose rotary control wheel 694 to have the feel of mechanical end stops and/or a mechanical centre.

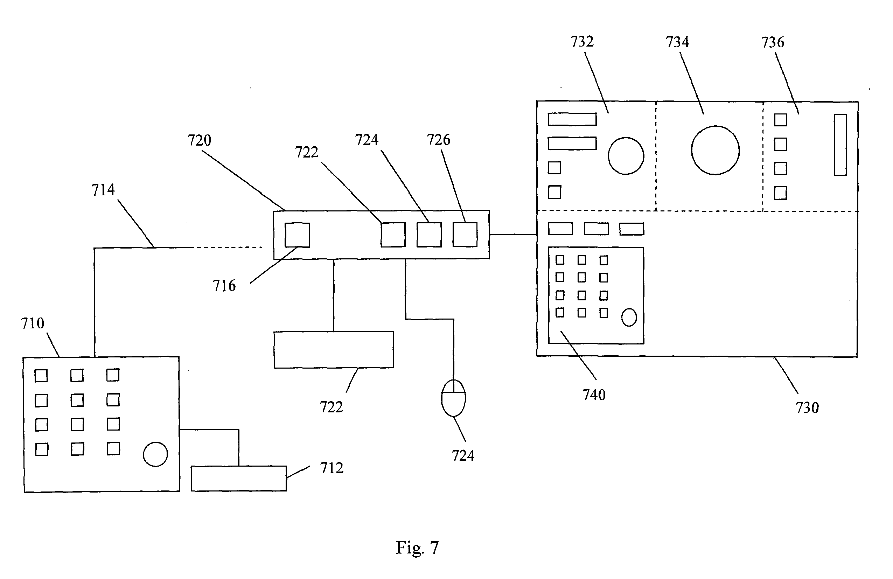

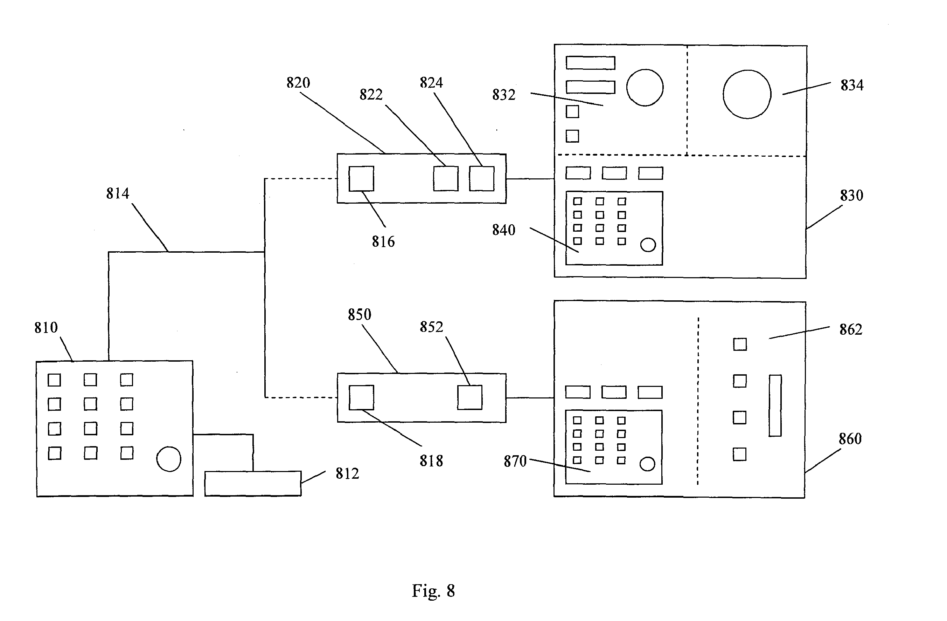

Figures 7 and 8 show further embodiments of the invention. In the embodiments of figures 7 and 8, configurable control systems are provided that can be configured to control multiple GUIs, simultaneously.

In the arrangement of figure 7, the multiple GUI displays and their GUI applications are installed on one computer. In figure 8, the multiple GUI displays and their GUI applications are installed on more than one computer.

Figure 7 shows a configurable hardware panel 710 connected to computer 720. Computer 720 is connected to computer screen 730.

Computer screen 730 displays:
(i) First GUI display 732, with icons provided by first GUI application 722 that is running on computer 720.
(ii) Second GUI display 734, with icons provided by second GUI application 724 that is running on computer 720.
(iii) Third GUI display 736, with icons provided by third GUI application 726 that is running on computer 720.
(iv) Graphical representation 740, which comprises icons representing the input actuators on configurable hardware panel 710, and three rectangular mode selection icons at the upper edge of graphical representation 740.

Local application 716 is also installed on computer 720. Local application 716 is adapted to
(i) configure configurable hardware panel 710; and
(ii) provide communication between configurable hardware panel 710 and the three GUIs, i.e. the first GUI 732, 722, the second GUI 734, 724, and the third GUI 736, 726.

Keyboard 712 is also provided together with configurable hardware panel 710. The keyboard 712 allows characters to be entered remotely into text or list boxes on the GUI displays 732, 734, 736, by the user who is operating configurable hardware panel 710.

Keyboard 722 and mouse 724 are connected to computer 720, Keyboard 722 and mouse 724 are the usual means of controlling computer 720 when configurable hardware panel 710 is not being used to control the GUIs.

Figure 8 shows a configurable hardware panel 810 connected to first computer 820 and to second computer 850. Computer 820 is connected to computer screen 830. Computer 850 is connected to computer screen 860.

Computer screen 830 displays:
(i) First GUI display 832, with icons provided by first GUI application 822 that is running on computer 820.
(ii) Second GUI display 834, with icons provided by second GUI application 824 that is running on computer 820.
(iii) Graphical representation 840, which comprises icons representing the input actuators on configurable hardware panel 810, and mode selection icons.

Local application 816 is also installed on computer 820. Local application 816 is adapted to
(i) configure configurable hardware panel 810; and
(ii) provide communication between configurable hardware panel 810 and the first 832, 822 and second 834, 824 GUIs.

Computer screen 860 displays:
(i) GUI display 862, with icons provided by first GUI application 852 that is running on computer 850.
(ii) Graphical representation 870, which comprises icons representing the input actuators on configurable hardware panel 810, and mode selection icons.

Local application 818 is also installed on computer 850. Local application 818 is adapted to
(i) configure configurable hardware panel 810; and
(ii) provide communication between configurable hardware panel 810 and GUI 862, 852.

Keyboard 812 is also provided together with configurable hardware panel 810. Keyboard 812 allows characters to be entered remotely into text or list boxes on the GUI displays 832, 834 and 862, by the user who is operating configurable hardware panel 810.

Each of first computer 820 and second computer 850 also has their own mouse and keyboard, although these have not been shown on figure 8 for clarity. They are the usual means of controlling first computer 820 and second computer 850 when configurable hardware panel 810 is not being used to control the GUIs.

The embodiments of figures 7 and 8 may provide the ability, from one button of the configurable hardware panel, to control two or more GUI display buttons simultaneously from two or more different GUI displays. So, for example, it is possible to play two or more media players simultaneously. In a busy environment, where many keyboards and mice clutter the desk, a single hardware control panel controlling key functions is desirable.

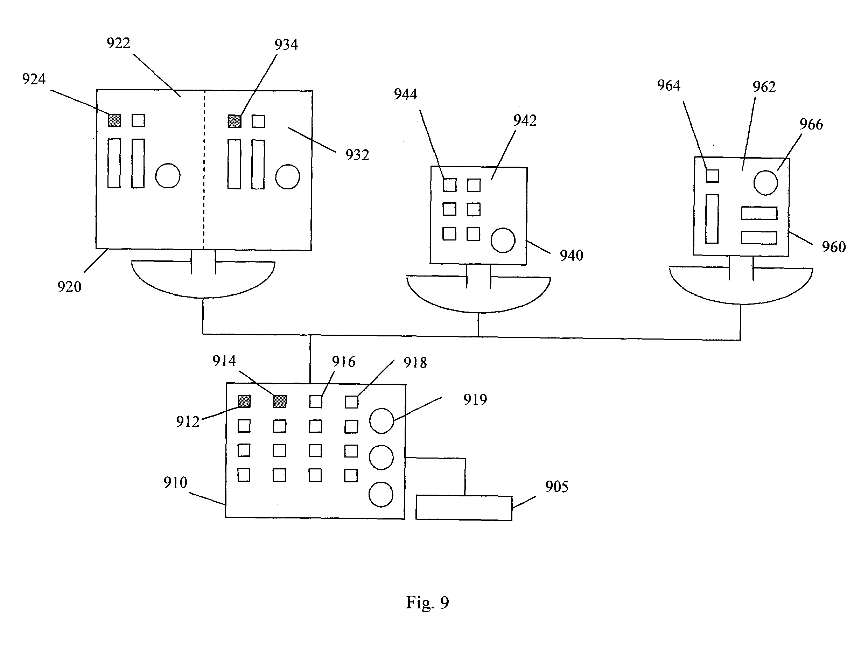

In the embodiments of Figures 7 and 8, the configurable hardware panel 710 or 810 is adapted to control more than one GUI simultaneously. For example, configurable hardware panel 710 can control first GUI 732,722, second GUI 734,724, and third GUI 736,726 simultaneously. In order to do this, a subset of the icons on graphical representation 740 is associated with the icons of each GUI display. This can be better understood by turning to figure 9.

Figure 9 shows which input actuators of the configurable hardware panel control various functions of the multiple GUIs.

In figure 9, configurable hardware panel 910 is linked to three computers. Only the screens of the computers have been shown on figure 9, for clarity. The arrangement of figure 9 is therefore analogous to that in figure 8.

First computer screen 920 displays first GUI display 922 and second GUI display 932. Second computer screen 940 displays third GUI display 942. Third computer screen 960 displays fourth GUI display 962.

Keyboard 905 is also linked to configurable hardware panel 910.

During a learning mode of operation, a graphical representation of the input actuators on configurable hardware panel 910 is displayed on each of the first 920, second 940 and third 960 computer screens. These representations have not been shown on figure 9, but are similar to graphical representations 840, 870 in figure 8. Considering, for example, second computer screen 940, a user associates at least one icon from the graphical representation with at least one icon 944 of the GUI display 942. An association is thereby created between an icon that represents an input actuator of configurable hardware panel 910 and at least one icon 944 of GUI display 942. This process is completed for each GUI that the user wishes to control with configurable hardware panel 910.

The information about the associations is transferred from the local applications in each of the three computers to configurable hardware panel 910. This occurs in a programming mode of operation. The result is that configurable hardware panel 910 has been configured.

A user can now use configurable hardware panel 910 to control the functions depicted in GUI displays 922, 932, 942 and 962 with which the input actuators of configurable hardware panel 910 have now been associated, or 'linked'. This is the translator mode of operation, in which commands that a user enters into the input actuators of configurable control panel 910 cause changes to:
(i) The icons of the GUI displays; and
(ii) The functions and settings that are controlled by those icons of the GUI displays.

Figure 9 demonstrates one example of the configuration which a user might choose. Input actuators 912, 914, 916 and 918 of configurable hardware panel 910 all take the form of buttons. Input actuator 919 is a rotary control. Each of these input actuators is linked to one icon in one of the four GUI displays. As an example, input actuator 912 is associated with, and hence controls, icon 924 of GUI 922. Input actuator 912 and icon 924 have been shown with the same hashing on figure 9, to indicate their association.

Similarly, input actuator 914 is associated with, and hence controls, icon 934 of GUI display 932. Both have been shown with matching hashing, to show this link.

Table 1 below lists the associations of input actuators 912, 914, 916, 918 and 919.

**Table 1: Actuators and associated icons in figure 9**

| **Input actuator of configurable hardware panel 910** | **Icon with which input actuator is associated** | **GUI of which icon is part** |
|---|---|---|
| 912 | 924 | 922, on screen 920 |
| 914 | 934 | 932, on screen 920 |
| 916 | 944 | 942, on screen 940 |
| 918 | 964 | 962, on screen 960 |
| 919 | 966 | 962, on screen 960 |

The embodiment of figure 9 shows that:
(i) One configurable control panel 910 can control multiple GUIs on one computer screen, i.e. GUI displays 922 and 932 on computer screen 920;
(ii) One configurable control panel 910 can control multiple GUIs on different computer screens, i.e. GUI displays 922, 942 and 962 on computer screens 920, 940 and 960.

In the example shown in table 1 above, rotary control 919 on configurable hardware panel 910 was associated with icon 966. Icon 966 might in fact be a slider control. So it is not necessarily the case that the input actuators of the configurable hardware panel must be identical in design to the icons with which they are associated.

In figure 9, hashing was chosen to indicate the linkages between two of the input actuators and the icons with which they are associated. However, in the embodiments of figure 7, 8 and 9:
(i) Each input actuator of configurable hardware panel 910 can be provided with a coloured background, the colour of the background being selectable in order to indicate a particular GUI controlled by that input actuator. Hence, in the example of figure 9, input actuators 918 and 919 would have the same colour in their background, since each is associated with an icon on the same GUI display 962. The input actuators 912, 914 and 916 would all display different background colours, i.e. different from each other and different from the colour used for input actuators 918 and 919, because they are associated with icons from GUI displays 922, 932 and 942 respectively.
(ii) Some or all of the input actuators would have a programmable display built into the top of the actuator. The programmable display is adapted to show text and/or graphics identifying the icon of the GUI, or its control, with which the input actuator is associated. So if icon 924 were the 'Play' button on a video system, then in the example of figure 9, input actuator 912 would display the word 'Play', when it had been associated with icon 924. If icon 966 were a slider control for volume, then rotary control 919 might display 'Vol'.

As described in connection with figures 3-9, the invention also comprises a method of controlling a graphical user interface 310, 350, the graphical user interface being installed on a computer 320. The method comprises connecting a configurable hardware panel 380 to the computer 320, installing a local application 350 on the computer 320, the local application:
(i) configuring the configurable hardware panel 380; and
(ii) providing communication between the configurable hardware panel 380 and the graphical user interface 310, 350.

The invention further comprises a computer program, or a computer program product, for implementing the invention. The local application and/or software installed on the configurable hardware panel may be used to implement the invention. The local application and/or software installed on the configurable hardware panel may be 'preinstalled', may be provided on a disc, or be a downloadable software module.

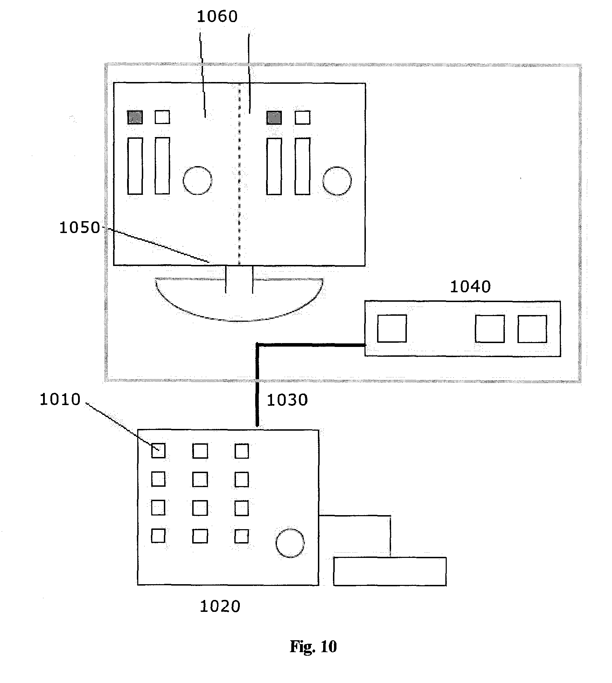

Figure 10 shows a schematic view of a computer 1040, computer screen 1050, and configurable hardware control panel 1020 of the invention, generally corresponding to the arrangement of figure 3.

Computer screen 1050 displays two GUIs 1060, each of which represent part of a computer GUI application that the invention can control. The local application is one of the programs running on computer system 1040. Hardware control panel 1020 may be connected by wired control 1030 to computer 1040.

The top left button 1010 of the configurable hardware panel may display a word such as 'PLAY'. This enables a user of the configurable hardware panel to see easily the GUI function that the user can control from that button. One button 1010 may control the 'Play' functions controlled by both the highlighted buttons on the two GUIs 1060.

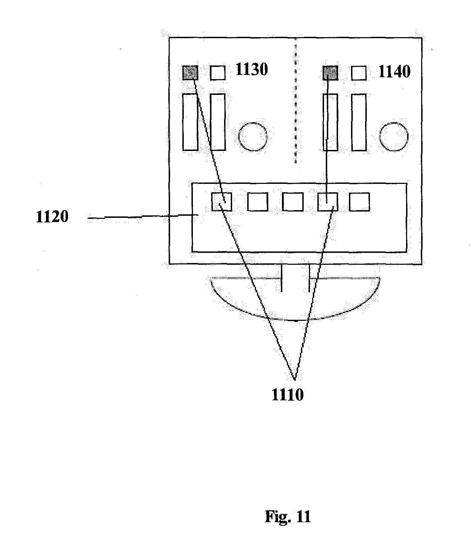

Figure 11 shows a view of a computer screen. The two GUI displays 1130, 1140 run on a single computer screen, as generally described in connection with figure 7. GUI display 1130 relates to a first application running on the computer, and GUI display 1140 relates to second application running on the same computer.

Figure 11 shows the step of associating icons 1110 of the graphical representation 1120 of the configurable hardware panel with controls from two GUI displays 1130 and 1140. This is the learning mode.

The two lines on the computer screen indicate the step of associating a button in the left column of graphical representation 1120 with one control of GUI display 1130, and a button in the fourth column of the graphical representation 1120 with one control on GUI display 1140.

Once the learning mode is complete:
(i) The button in the first column on the configurable hardware panel controls the highlighted control on GUI display 1130.
(ii) The button in the fourth column on the configurable hardware panel controls the highlighted control on GUI display 1140.

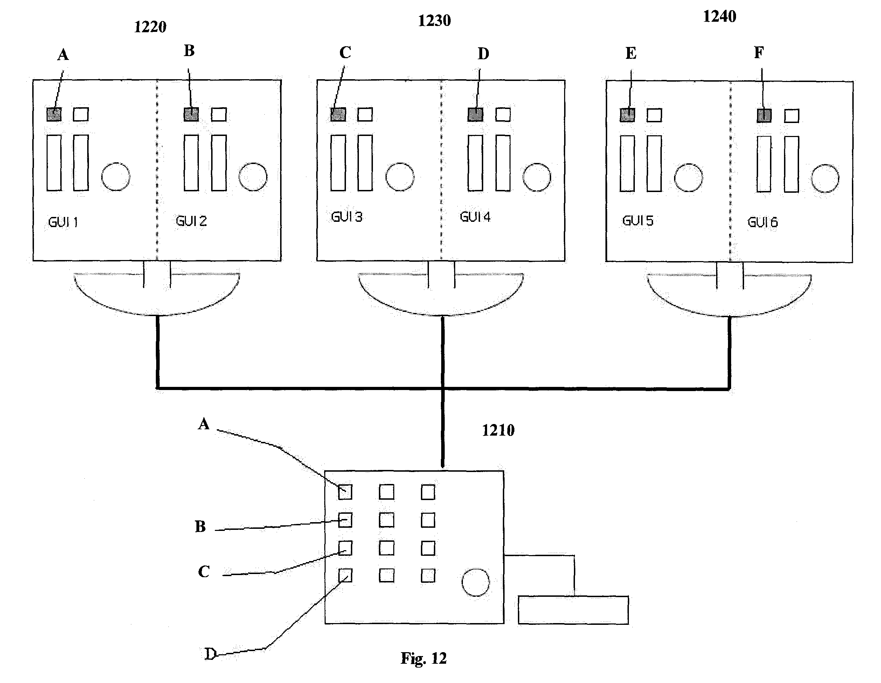

Figure 12 shows a configurable hardware panel 1210 controlling six GUIs 1-6 on three separate computer screens 1220, 1230, 1240. This arrangement generally corresponds with that described in connection with figures 8 and 9. Screen 1220 displays activity on a first computer, screen 1230 displays activity on a second computer, and screen 1240 displays activity on a third computer.

In order to illustrate the operation of the arrangement of figure 12, four buttons A, B, C, D have been shown in the left column of configurable hardware panel 1210. Buttons A-D on configurable hardware panel 1210 are respectively linked to four controls, on four of the GUIs. The four buttons A-D on configurable hardware panel 1210 may be marked with colours, indicating the GUI displays with which they are associated.

Button A on configurable hardware panel 1210 has been programmed to be associated with control A on GUI1 on computer screen 1220. Button B on configurable hardware panel 1210 has been programmed to be associated with control B on GUI2 on computer screen 1220. Button C on configurable hardware panel 1210 has been programmed to be associated with control C on GUI3 on computer screen 1220. Button D on configurable hardware panel 1210 has been programmed to be associated with control D on GUI4 on computer screen 1220. Two further buttons on configurable hardware panel 1210 would be programmed to be associated with controls E and F on computer screen 1240.

Pressing each of buttons A-D on configurable hardware panel 1210 controls the corresponding buttons of the relevant GUI on computer screens 1220 or 1230.

## Claims

1. A configurable control system (300) for a graphical user interface (310, 350), the graphical user interface being installed on a computer (320), the configurable control system comprising:
a configurable hardware panel (380), the configurable hardware panel (380) being connectable to the computer (320); and
a local application (370) for installation on the computer (320), the local application being adapted to:
(i) access one or more controls of the graphical user interface (310, 350), and learn the function of the one or more controls;
(ii) configure the configurable hardware panel (380) by passing information about the one or more controls of the graphical user interface (310, 350) to the configurable hardware panel; and
(iii) provide communication between the configurable hardware panel (380) and the graphical user interface (310, 350).

2. The configurable control system (500) of claim 1, wherein:
the configurable hardware panel (580) comprises input actuators (692), the input actuators (692) being adapted to reproduce the actions of controls on the graphical user interface (510, 550), based on information received from the local application (570).

3. The configurable control system (300, 500) of claim 1 or claim 2, wherein:
the local application (370, 570) is adapted to access the graphical user interface (310, 350) via the operating system (425) of the computer (420).

4. The configurable control system (500) of any previous claim, wherein:
the local application (570) is adapted to provide, on a screen (505) of the computer (520), a graphical representation (584) of the configurable hardware panel (580);
the graphical representation (584) of the configurable hardware panel (580) comprises icons (586), at least some of the icons taking the form of buttons, rotary wheels, sliders, joysticks and/or tracker balls; and
the local application (570) is adapted to learn the function of a particular control of the graphical user interface (510, 550) when a user drags and drops one of the icons (586) of the graphical representation (584) of the configurable hardware panel (580) onto the particular control (512) of the graphical user interface.

5. The configurable control system (500) of claim 4, wherein:
(i) the graphical representation (584) of the configurable hardware panel (580) further comprises program icons (588);
(ii) a first group of program icons (588) are provided for a user to select learning mode, program mode and translator mode;
(iii) a second group of icons (586) are provided for a user to:
program the visual appearance of one or more input actuators (692) on the configurable hardware panel (680), using a display built into the top of each of the one or more input actuators;
program the equivalent of the mechanical features of one or more input actuators (692);
assign actions to one or more input actuators (692); and/or
test the appearance and function of one or more input actuators (692).

6. The configurable control system (300, 500) of any previous claim, the configurable hardware panel (680) comprising buttons, a rotary control wheel and a keyboard, wherein:
each button (692) is adapted to reproduce the actions of a button on the graphical user interface (510, 550), and
has a programmable display adapted to show the identity and/or function of the corresponding button on the graphical user interface (510, 550);
the rotary control wheel (694) is adapted to reproduce the actions of one or more slider controls on the graphical user interface; and/or
the keyboard (582) is adapted to allow characters to be entered into text or list boxes on the graphical user interface.

7. A configurable control system for multiple graphical user interfaces, the graphical user interfaces being installed on one or more computers, the configurable control system comprising:
a configurable hardware panel (710; 810), the configurable hardware panel being connectable to at least one computer (720; 820, 850); and
one or more local applications (716; 816, 818), a local application being installed on each computer that has a graphical user interface to be controlled;
each local application (716; 816, 818) being adapted to:
(i) access at least one control of a graphical user interface (510, 550), and learn the function of the at least one control;
(ii) configure the configurable hardware panel (710; 810) by passing information about the at least one control of the graphical user interface (310, 350) to the configurable hardware panel; and
(iii) provide communication between the configurable hardware panel (710; 810) and one or more graphical user interfaces (732, 734, 736; 832, 834, 862) on the computer (720; 820, 850) where the local application is installed.

8. A configurable control system in accordance with claim 7, wherein:
multiple graphical user interfaces (732, 734, 736) and a local application (716) are installed on a computer (720);
the configurable hardware panel (710) is connectable to the computer (720); and
the local application (716) is adapted to:
(i) configure the configurable hardware panel (710); and
(ii) provide communication between the configurable hardware panel (710) and the multiple graphical user interfaces (732, 734, 736) on the computer (720) where the local application is installed;
whereby the configurable hardware panel (710) can control the multiple graphical user interfaces (732, 734, 736) simultaneously, and/or without the need to select each application by some other means.

9. A configurable control system in accordance with claim 7, wherein:
a first local application (816) and at least one graphical user interface (832, 834) are located on a first computer (820);
a second local application (818) and at least one graphical user interface (862) are located on a second computer (850);
the configurable hardware panel (810) is connectable to the first (820) and second (850) computers;
the first local application (816) is adapted to configure the configurable hardware panel (810) and to provide communication between the configurable hardware panel (810) and the at least one graphical user interface (832, 834) on the first computer (820); and
the second local application (818) is adapted to configure the configurable hardware panel (810) and to provide communication between the configurable hardware panel (810) and the at least one graphical user interface (862) on the second computer (850);
whereby the configurable hardware panel (810) can control the multiple graphical user interfaces (832, 834, 862) simultaneously, and/or without the need to select each application by some other means.

10. The configurable control system of any of claims 7-9, wherein:
the configurable hardware panel (910) has at least one input actuator (912, 914, 916, 918) for each graphical user interface (922, 932, 942, 962); and
each input actuator (912, 914, 916, 918) has a coloured background, the colour of the background being selectable in order to indicate a particular graphical user interface (922, 932, 942, 962) controlled by that input actuator.

11. The configurable control system of any of claims 7-10, wherein:
one button of the configurable hardware panel (910) is adapted to control two or more GUI display buttons simultaneously, from two or more different GUI displays.

12. The configurable control system of any of claims 7-10, wherein:
the configurable hardware panel has at least one input actuator for each graphical user interface; and
each input actuator has a coloured background, the colour of the background being selectable in order to indicate a particular graphical user interface controlled by that input actuator.

13. A method of controlling a graphical user interface (310, 350), the graphical user interface being installed on a computer (320), the method comprising:
connecting a configurable hardware panel (380) to the computer (320);
installing a local application (370) on the computer; and
the local application (370):
(i) accessing one or more controls of the graphical user interface (310, 350), and learning the function of the one or more controls;
(ii) configuring the configurable hardware panel (380) by passing information about the one or more controls of the graphical user interface (310, 350) to the configurable hardware panel; and
(iii) providing communication between the configurable hardware panel (380) and the graphical user interface (310, 350).

14. The method of claim 13, wherein, in a learning mode:
(i) on a screen (505) of the computer, the local application (570) presents an operator with a graphical representation (584) of the configurable hardware panel (580), the graphical representation comprising icons (586);
(ii) with the graphical user interface (310, 350) running on the computer, the user creates an association between an icon (586) and a control (512) of the graphical user interface, whereby the local application (570) learns the properties of that control.

15. A computer program or a computer program product for implementing the invention of claim 13 or claim 14.
